# EUROPEAN PATENT APPLICATION

(11) **EP 4 203 173 A1**
(43) Date of publication of application: **28.06.2023**
(21) Application number: 21858457.1
(22) Date of filing: 23.06.2021
(51) Int. Cl.: H01M 50/538, H01M 50/172, H01M 50/572, H01M 10/04

(54) **SECONDARY BATTERY**

(30) Priority: 20.08.2020 KR 20200104619
(71) Applicant: Samsung SDI Co., Ltd., Yongin-si, Gyeonggi-do 17084 (KR)
(72) Inventor: DOO, Jae Gyun, Yongin-si, Gyeonggi-do 17084 (KR); YU, Gwan Hyeon, Yongin-si, Gyeonggi-do 17084 (KR); PARK, Jung Hyun, Yongin-si, Gyeonggi-do 17084 (KR); SHIN, Joo Youn, Yongin-si, Gyeonggi-do 17084 (KR); SHIN, Ye Eun, Yongin-si, Gyeonggi-do 17084 (KR)
(74) Representative: Marks & Clerk LLP
(86) International application number: PCT/KR2021/007893
(87) International publication number: WO 2022/039369

(57) **Abstract**

An embodiment of the present invention relates to a cylindrical secondary battery in which the current collecting structure has been improved. According to the present invention, an elastic part is provided integrally with or separably from a current collecting plate, and thus shocks from external vibration can be absorbed. Thus, the issue in which the substrate of an electrode assembly is squashed or compacted can be minimized.

## Description

### TECHNICAL FIELD

Embodiments of the present invention relate to a cylindrical secondary battery having an improved current collecting structure.

### BACKGROUND ART

In general, cylindrical secondary batteries include cylindrical electrode assemblies, cylindrical cans accommodating the electrode assemblies and electrolytes, and cap assemblies coupled to upper openings of the cans to seal the cans and to allow current generated in the electrode assemblies to flow to external devices.

In general, in order to reduce the resistance of the electrode assemblies, a method of gathering a plurality of substrates protruding from electrode plates and connecting the substrates with conductive wires is mainly used in current collecting structures of the electrode assemblies. However, such a current collecting structure causes a lot of empty spaces in a region of an electrode plate from which the substrates protrude, unlike a region to which active materials are applied, and thus, the protruding substrates may be bent or compacted when vibration occurs. Accordingly, stress transferred to welding points between a substrate and a current collecting plate is increased due to an increased movement amount of the electrode assembly, and thus, the current collecting plate itself becomes vulnerable to the vibration.

As a technique for solving the above problems, there is a method for collecting a plurality of substrates, connecting lead tabs to the substrates, and directly welding terminals of a can to the current collecting plate. However, this structure hinders the degree of freedom in design due to a narrow gap between the electrode assembly and the current collecting plate, and causes additional material costs and processes, increased component resistance, and the like due to the addition of lead tabs.

The above information disclosed in this section of Background Art is only for enhancement of understanding of the background of the present invention, and thus, it may contain information that does not form the related art.

### DISCLOSURE OF THE INVENTION

### TECHNICAL PROBLEM

The present invention provides a cylindrical secondary battery having improved vibration resistance and enhanced current collecting structure.

### TECHNICAL SOLUTION

A secondary battery according to an embodiment of the present invention includes: a can having a cylindrical shape with one end open; an electrode assembly which is accommodated in the can and in which a first electrode plate, a separator, and a second electrode plate are stacked and wound in a cylindrical shape, wherein a first electrode non-coating portion of the first electrode plate protrudes at one end of the electrode assembly in a longitudinal direction, and a second electrode non-coating portion of the second electrode plate protrudes at the other end of the electrode assembly; a cap assembly configured to close the open one end of the can in a state in which the electrode assembly is accommodated in the can; a first electrode current collecting plate which is inserted into one end of the electrode assembly in the longitudinal direction, and includes a plurality of substrate current collecting parts protruding from a plate surface and electrically connected to the first electrode non-coating portion, a can connection part spaced apart from the substrate current collecting parts and electrically connected to the can, and an elastic part elastically deformed in the longitudinal direction of the electrode assembly; and a second electrode current collecting plate which is inserted into the other end of the electrode assembly in the longitudinal direction, and includes a plurality of substrate current collecting parts protruding from a plate surface and electrically connected to the second electrode non-coating portion, a can connection part spaced apart from the substrate current collecting parts and electrically connected to the cap assembly, and an elastic part elastically deformed in the longitudinal direction of the electrode assembly.

The first electrode current collecting plate and the second electrode current collecting plate have the same shape and are disposed symmetrically with each other.

The elastic parts are formed integrally with the respective plate surfaces of the first electrode current collecting plate and the second electrode current collecting plate.

The elastic parts are formed separately and coupled to the respective plate surfaces of the first electrode current collecting plate and the second electrode current collecting plate.

The first electrode current collecting plate and the second electrode current collecting plate have a disc shape, and the plurality of substrate current collecting parts are formed in a radial direction while protruding.

The elastic part has a concave-convex shape formed by cutting a portion of the plate surface and is spaced apart from the substrate current collecting parts.

The elastic part is formed by cutting a portion of substrate current collecting parts, which are arranged in a straight line, among the plurality of substrate current collecting parts and bending the portion several times, and the cut end of the elastic part serves as the can connection part.

The elastic part has a concave-convex shape formed by cutting a portion of substrate current collecting parts, which are arranged in a straight line, among the plurality of substrate current collecting parts, and the cut end of the elastic part serves as the can connection part.

Each of the substrate current collecting parts has a width greater than that of the elastic part.

The elastic part includes a disc-shaped plate spring having a diameter equal to or less than those of the first electrode current collecting plate and the second electrode current collecting plate.

One end of the elastic part is physically and electrically connected to the first electrode current collecting plate or the second electrode current collecting plate, and the other end thereof is physically and electrically connected to the can or the cap assembly.

The elastic part includes a conductive material.

A protruding direction of the substrate current collecting parts of the first electrode current collecting plate is oriented toward the first electrode non-coating portion, and a protruding direction of the substrate current collecting parts of the second electrode current collecting plate is oriented toward the second electrode non-coating portion.

Each of the substrate current collecting parts of the first electrode current collecting plate includes a welding surface welded to the first electrode non-coating portion, and each of the substrate current collecting parts of the second electrode current collecting plate includes a welding surface welded to the second electrode non-coating portion.

### ADVANTAGEOUS EFFECTS

According to the present invention, an elastic part is provided integrally with or separably from a current collecting plate, and thus, shocks from external vibration can be absorbed. Thus, the issue in which a substrate of an electrode assembly is squashed or compacted can be minimized.

### BRIEF DESCRIPTION OF THE DRAWINGS

FIG. 1 is a vertical cross-sectional view illustrating a cylindrical secondary battery according to an embodiment of the present invention.
FIG. 2 is a perspective view illustrating a current collecting plate according to a first embodiment of the present invention.
FIG. 3 is a partial perspective view of a current collecting plate of FIG. 2.
FIG. 4 is a perspective view illustrating a current collecting plate and a current collecting structure of FIG. 2.
FIG. 5 is a perspective view illustrating a current collecting plate according to a second embodiment of the present invention.
FIG. 6 is a partial perspective view of a current collecting plate of FIG. 5.
FIG. 7 is a perspective view illustrating a current collecting plate according to a third embodiment of the present invention.
FIG. 8 is a perspective view illustrating a current collecting plate and a current collecting structure of FIG. 7.
FIG. 9 is an exploded perspective view illustrating a current collecting plate according to a fourth embodiment of the present invention.
FIG. 10 is a side cross-sectional view illustrating a current collecting plate of FIG. 9.

### BEST MODE FOR CARRYING OUT THE INVENTION

The embodiments of the present invention are provided to more fully describe the present invention to those skilled in the art. The following embodiments may be modified in many different forms, and the scope of the present invention is not limited to the following embodiments. Rather, these embodiments are provided so that this disclosure will be thorough and complete, and will fully convey the concept of the present invention to those skilled in the art.

Also, in the drawings, the thickness and size of each layer are exaggerated for convenience and clarity of illustration, and like reference numerals refer to like elements throughout. As used in this specification, the term "and/or" includes any and all combinations of one or more of the associated listed items. Also, in this specification, it will be understood that when a member A is referred to as being "connected to" a member B, the member A can be directly connected to the member B, or a member C may be interposed between the members A and B so that the member A is indirectly connected to the member B.

The terms used herein are for the purpose of describing specific embodiments only and are not intended to be limiting the present invention. As used in this specification, a singular form may, unless definitely indicating a particular case in terms of the context, include a plural form. Also, it will be further understood that the terms "comprise or include" and/or "comprising or including," when used in this specification, specify the presence of stated features, numbers, steps, operations, members, elements, and/or groups thereof, but do not preclude the presence or addition of one or more other features, numbers, steps, operations, members, elements, and/or groups thereof.

In the specification, although the terms first, second, etc. may be used to describe various members, components, regions, layers, and/or portions, it is obvious that these members, components, regions, layers, and/or portions should not be limited by these terms. These terms are only used to distinguish one member, component, region, layer, or portion from another region, layer, or portion. Thus, a first member, component, region, layer, or portion, which will be described below, may also refer to a second member, component, region, layer, or portion, without departing from the teaching of the present invention.

Spatially relative terms, such as "beneath," "below," "lower," "above," "upper," may be used herein for easy understanding of one element or feature and another element(s) or feature(s) as illustrated in the drawings. These spatially relative terms are intended for easy comprehension of the prevent invention according to various process states or usage states of the prevent invention, and thus, the present invention is not limited thereto. For example, when an element or feature in the drawings is turned over, the element and feature described as "beneath" or "below" are changed into "above" or "upper." Thus, the term "beneath" can encompass both orientations of "above" and "below."

Hereinafter, a secondary battery according to an embodiment of the present invention will be described in detail with reference to the accompanying drawings.

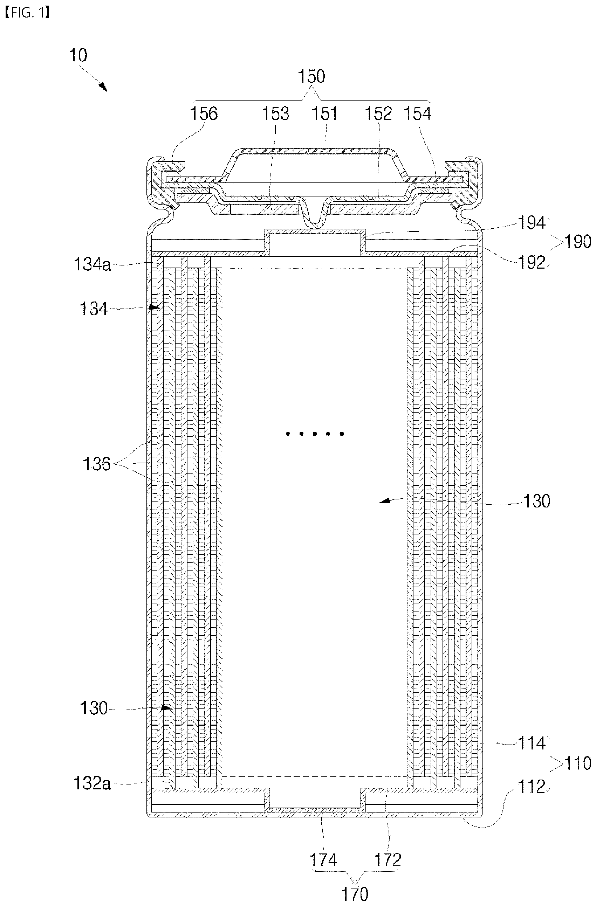

FIG. 1 is a vertical cross-sectional view illustrating a cylindrical secondary battery according to an embodiment of the present invention.

As illustrated in FIG. 1, a cylindrical secondary battery 10 according to an embodiment of the present invention may include a cylindrical can 110, an electrode assembly 130 inserted into the can 110, a cap assembly 150 coupled to one end of the can 110, and a first electrode current collecting plate 170 and a second electrode current collecting plate 190 which connect the electrode assembly 130 to the cap assembly 150.

The can 110 includes a circular bottom portion 110 and a side portion 130 extending upward from the bottom portion 110, and has a cylindrical shape with an upper end of the side portion 130 open (hereinafter, referred to as an opening). In a manufacturing process of the secondary battery 1000, the electrode assembly 300 is inserted into the can 100 together with an electrolyte via the opening of the can 100. The electrode assembly 130 is electrically connected to the can 110 and the cap assembly 150 by a first electrode plate 132 and a second electrode plate 134. The can 100 may be made of steel, a steel alloy, nickel plated steel, a nickel plated steel alloy, aluminum, an aluminum alloy, or an equivalent thereof, but the materials thereof are not limited thereto. The cap assembly 150 is inserted into the opening to close the opening in a state in which the electrode assembly 130 is accommodated inside the can 110.

The electrode assembly 130 includes a first electrode plate 132, which is a negative electrode plate coated with a negative electrode active material (e.g., graphite, carbon, etc.), a second electrode plate 134, which is a positive electrode plate coated with a positive electrode active material (e.g., transition metal oxide (LiCoO₂, LiNiO₂, LiMn₂O₄, etc.)), and a separator 136 disposed between the first electrode plate 132 and the second electrode plate 134 to prevent a short circuit and to allow only lithium ions to move. The first electrode plate 132, the second electrode plate 134, and the separator 136 may be wound in a substantially cylindrical shape and accommodated inside the can 100. The first electrode plate 132 may include copper (Cu) or nickel (Ni) foil, the second electrode plate 134 may include an aluminum (Al) foil, and the separator 136 may include a polyethylene (PE) or a polypropylene (PP). However, materials thereof are not limited to these materials in the present invention.

A non-coating portion, which is not coated with an active material, may be formed in the first electrode plate 132 and the second electrode plate 134. For example, the first electrode plate 132 serving as a negative electrode plate may have, at a lower end, a first electrode non-coating portion 132a to which a negative electrode active material is not applied, and the second electrode plate 134 serving as a positive electrode plate may have, at an upper end, a second electrode non-coating portion 134a to which a positive electrode active material is not applied. A first electrode current collecting plate 170 and a second electrode current collecting plate 190, which will be described later, are connected to the first electrode non-coating portion 132a and the second electrode non-coating portion 134a, respectively, and thus, the can 110 is electrically connected to the electrode assembly 130.

The cap assembly 150 is coupled to the upper opening of the can 110 and serves to seal the can 110. The cap assembly 150 may include a cap-up 151 located in the outermost region, a safety vent 152 coupled to a lower portion of the cap-up 151, a cap-down 153 coupled to a lower portion of the safety vent 152, an insulator 154 inserted between the safety vent 152 and the cap-down 153; and an insulating gasket 156 inserted between the cap assembly 150 and the can 110. The cap-up 151 has a terminal protruding upward and is electrically connected to the outside of the secondary battery 10. When gas is generated inside the secondary battery 10 due to overcharging or abnormality, the safety vent 152 is broken, when the gas pressure exceeds a certain pressure, and releases the gas to prevent damage to the secondary battery 10. The cap-down 153 supports the safety vent 152 from below, and a through-hole is formed in the center thereof so that a portion of the safety vent 152 protrudes through the through-hole and is electrically connected to the cap-down 153. The insulator 154 insulates the safety vent 152 and the cap-down 153 from each other. This is only an exemplary configuration, and the configuration of the cap assembly 150 is not limited to the above configuration.

Hereinafter, a current collecting structure for electrically connecting the electrode assembly 130 to the can 110 will be described in detail. Various embodiments have structures that can be commonly applied to both a first electrode current collecting plate and a second electrode current collecting plate. For convenience, a detailed structure will be described on the basis of the first electrode current collecting plate.

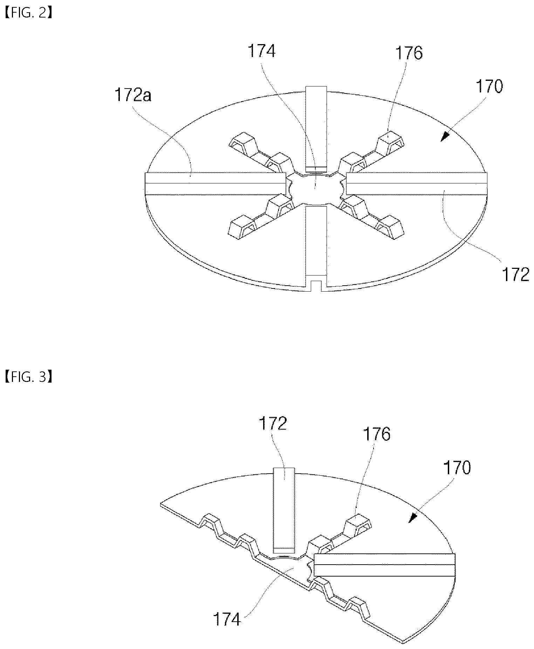

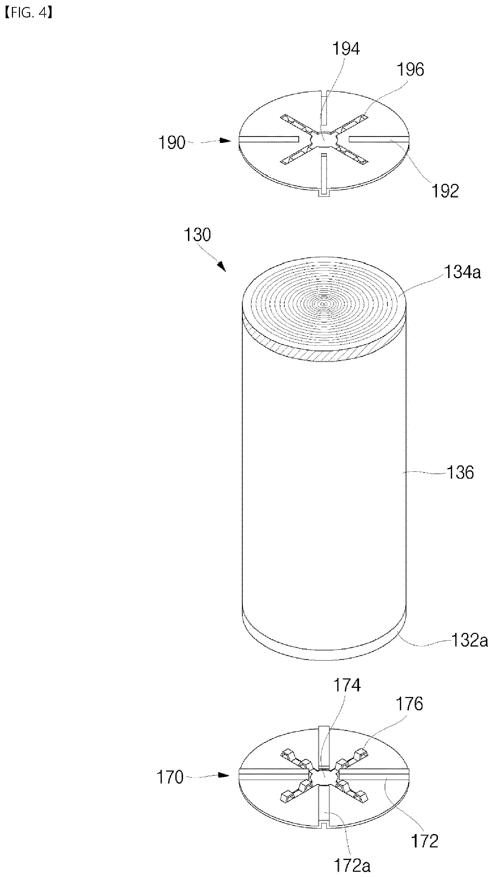

FIG. 2 is a perspective view illustrating a current collecting plate according to a first embodiment of the present invention. FIG. 3 is a partial perspective view of a current collecting plate of FIG. 2. FIG. 4 is a perspective view illustrating a current collecting plate and a current collecting structure of FIG. 2.

As illustrated in FIGS. 2 to 4, a current collecting plate according to the first embodiment of the present invention includes a first electrode current collecting plate 170 electrically connecting a first electrode plate 132 serving as a negative electrode plate to the bottom surface of a can 110. Accordingly, the first electrode current collecting plate 170 may be referred to as a negative electrode current collecting plate. A second electrode current collecting plate 190 includes a substrate current collecting part 192 having a welding surface 192a, a can connection part 194, and an elastic part 196, and may have the same structure as the first electrode current collecting plate 170. As shown in FIG. 4, the second electrode current collecting plate 190 is symmetrically installed to face the first electrode current collecting plate 170.

The first electrode current collecting plate 170 has an approximately disc shape, and is welded to a first electrode non-coating portion 132a of a first electrode plate 132 and the bottom surface of the can 110, and thus, the first electrode plate 132 is electrically connected to the bottom surface of the can 110. To this end, a substrate current collector 172 welded to the first electrode uncoated portion 132a and a can connection portion 174 welded to the can 110 may be formed on the first electrode collector plate 170. Also, an elastic part 176 may be provided between the substrate current collecting part 172 and the can connection part 174 to relieve a shock applied to the substrate current collecting part 172.

The substrate current collecting part 172 has a certain length in a radial direction of the electrode assembly 130 (a radial direction of the first electrode current collecting plate). The substrate current collecting part 172 is formed in the radial direction in the remaining region other than a partial region of the central portion of the first electrode current collecting plate 170 and protrudes therefrom. A protruding direction of the substrate current collecting part 172 is oriented toward the bottom surface of the can 110 that is on the opposite side from the cap assembly 150. For example, four substrate current collecting parts 172 may be formed, while protruding, at intervals of 90 degrees in the radial direction of the electrode assembly 130. For instance, the width of the substrate current collecting part 172 may be the same as or similar to that of the elastic part 176. Also, for instance, the radial length of the substrate current collecting part 172 may be obtained by subtracting the radius of the can connection part 174 from the radius of the first electrode current collecting plate 170. For instance, the substrate current collecting part 172 may protrude in the form of a quadrangular or circular cross-section. The first electrode non-coating portion 132a is welded to an upper surface of the protruding surfaces of the substrate current collecting part 172, and this upper surface is defined as a welding surface 172a.

The can connection part 174 includes a region welded to the bottom surface of the can 110 and may include a certain region of the central portion of the first electrode current collecting plate 170. The can connection part 174 includes a region in which the substrate current collecting part 172 or the elastic part 176 is not formed. The can connection part 174 is welded to the bottom of the can 110, and the substrate current collecting part 172 is welded to the first electrode non-coating portion 132a of the first electrode plate 132. Accordingly, the first electrode plate 132 and the bottom of the can 110 may be electrically connected to each other. To this end, a region of the can connection part 174 has a height lower than that of the protruding portion of the substrate current collecting part 172 or the elastic part 176 which will be described later. Preferably, the region of the can connection part 174 may have the same height as the plate surface of the first electrode current collecting plate 170 on which the substrate current collecting part 172 or the elastic part 176 is not formed. When the structure of the first electrode current collecting plate 170 is equally applied to the second electrode current collecting plate, the can connection part 174 may be welded and electrically connected to the cap assembly 150. The elastic part 176 is formed in a region other than regions in which the substrate current collecting parts 172 and the can connection part 174 are formed.

The elastic part 176 has a certain length in a radial direction of the electrode assembly 130 (a radial direction of the first electrode current collecting plate) and is formed integrally with the first electrode current collecting plate 170. Also, the elastic part 176 is formed in the radial direction in the remaining region other than a partial region of the central portion of the first electrode current collecting plate 170 and is provided in a region in which the substrate current collecting parts 172 are not formed. That is, the elastic part 176 is provided on a movement path of current between the substrate current collecting parts 172 and the can connection part 174, and thus, an effect of increasing the path is obtained. The elastic part 176 be formed by cutting a portion of the plate surface, connecting both ends in the longitudinal direction to the plate surface, and processing a specific shape in the longitudinal direction. The elastic part 176 may have a concave-convex shape in which a portion protruding toward the bottom surface of the can 110, which is on the opposite side from the cap assembly 150, and a portion recessed in the opposite direction are alternately repeated. The protruding and recessed portions are formed alternately, and thus, the elastic part 176 has elasticity and ductility. Therefore, the elastic part 176 may absorb shock caused by external vibration. For example, four elastic parts 176 may be formed at intervals of 90 degrees in the radial direction of the electrode assembly 130. For instance, the width of the elastic part 176 may be the same as or similar to that of the substrate current collecting part 172. Also, for instance, the length of the elastic part 176 in the radial direction may be smaller than the length of the substrate current collecting part 172. For instance, the elastic part 176 may protrude in the form of a quadrangular or circular cross-section. The size and shape of the elastic part 176 may vary depending on the size of the substrate current collecting part 172.

The first electrode non-coating portion 132a of the first electrode plate 132 and the second electrode non-coating portion 134a of the second electrode plate 134 protrude in the up and down directions of the electrode assembly 130. Therefore, when separate lead tabs are provided, the capacity of the secondary battery 10 is reduced due to the spaces required to bend the lead tabs. When non-coating portions are gathered and connected with a separate conductive wire without a lead tab, a lot of empty spaces are generated, and the non-coating portions (substrates) are squashed or compacted when external vibration is generated and transmitted. Accordingly, a movement amount of the electrode assembly is increased, and stress transferred to welding points between the non-coating portions and the current collecting plate is increased.

However, in the present invention, a separate lead tab is not provided, and thus, the decrease in capacity of the secondary battery 10 may be minimized. Also, in the present invention, the non-coating portion is directly welded to the substrate current collecting part 172, and the elastic part 176 serving as a buffer against vibration is provided between a region (the substrate current collecting part) welded to a substrate and a region (the can connection part) welded to the can 110 serving as a terminal. Therefore, it is possible to disperse stress applied to the substrate welded region when external vibration is generated and transmitted. Accordingly, the substrate is prevented from being pressed, compacted, or torn, and the welding is prevented from falling off. In addition, the elastic part 176 is provided, and thus, the tensile force applied to the substrate current collecting part 172 may be reduced due to the ductility and elasticity of the elastic part 176, even if the distance between welding points increases due to the movement of the electrode assembly 130.

The elastic part having the structure described above may be changed into various forms (detailed descriptions of the same structure, function, and effect as those of the foregoing embodiment will be omitted).

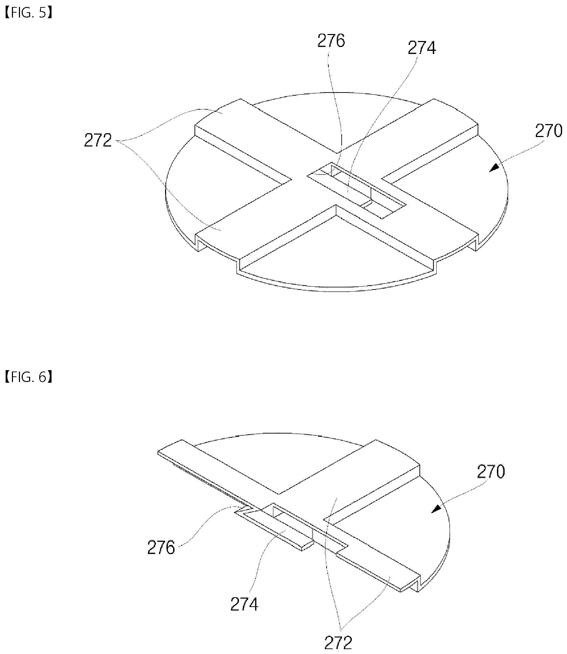

FIG. 5 is a perspective view illustrating a current collecting plate according to a second embodiment of the present invention. FIG. 6 is a partial perspective view of a current collecting plate of FIG. 5.

As illustrated in FIGS. 5 and 6, four substrate current collecting parts 272 having a certain width may be formed at intervals of 90 degrees and protrude on a disc of a first electrode current collecting plate 270 according to a second embodiment of the present invention. Here, each of the substrate current collecting parts 272 is formed in a radial direction of the first electrode current collecting plate 270 and may have a width greater than that of the substrate current collecting part 172 formed in the first electrode current collecting plate 170 according to the first embodiment. For instance, when the width of the substrate current collecting part 172 according to the first embodiment is x, the substrate current collecting part 272 according to the second embodiment may have a width of 3x. Also, the length of the substrate current collecting part 272 may be equal to, greater, or less than the length of the substrate current collecting part 172 according to the first embodiment. The cross-section of the substrate current collecting part 272 may have the same shape as the substrate current collecting part 172 according to the first embodiment. For example, when four substrate current collecting parts 272 are formed, a can connection part 274 and an elastic part 276 may be integrally formed on the two substrate current collecting parts 272 that form a straight line.

The can connection part 274 and the elastic part 276 may be formed by cutting the upper surfaces of the substrate current collecting parts 272, which form a straight line, in the longitudinal direction and bending one side thereof. When the cut sheet material is folded multiple times as illustrated in FIG. 5, the bent portion serves as the elastic part 276, and the end portion located on the same plate surface or parallel to the plate surface of the first electrode current collecting plate 270 serves as the can connection part 274. The can connection part 274 is a portion cut from one substrate current collecting part 272 and is thus connected to the substrate current collecting part 272 to which the elastic part 276 is connected. However, the can connection part 274 has a free end that is not connected to the substrate current collecting part 272 facing the substrate current collecting part 272 to which the elastic part 276 is connected. The free end of the can connection part 274 is connected and fixed to the bottom surface of a can 110 or a cap assembly 150 by welding. For instance, the elastic part 276 may be bent once at an acute angle from the upper surface of one substrate current collecting part 272 and then bent again. Here, the portion bent later may form an acute angle with the can connection part 274.

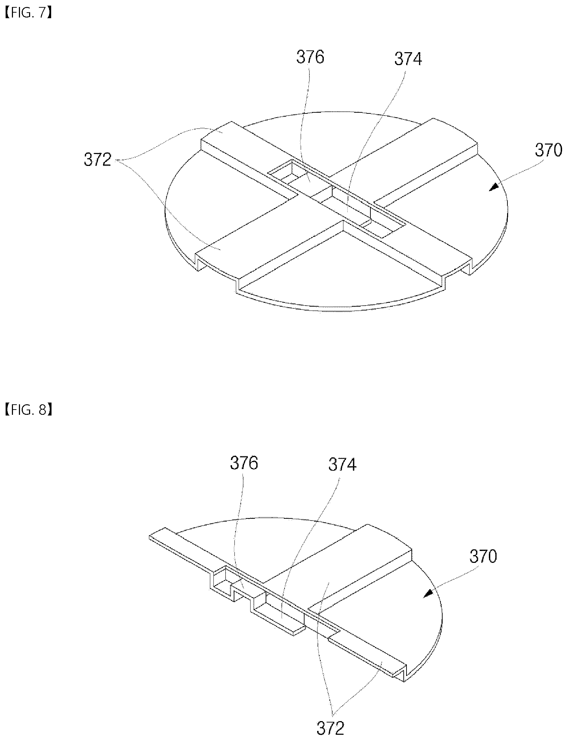

FIG. 7 is a perspective view illustrating a current collecting plate according to a third embodiment of the present invention. FIG. 8 is a perspective view illustrating a current collecting plate and a current collecting structure of FIG. 7.

As illustrated in FIGS. 7 and 8, four substrate current collecting parts 372 having a certain width may be formed at intervals of 90 degrees and protrude on a disc of a first electrode current collecting plate 370 according to a third embodiment of the present invention. Here, each of the substrate current collecting parts 372 is formed in a radial direction of the first electrode current collecting plate 370 and may have a width greater than that of the substrate current collecting part 172 formed in the first electrode current collecting plate 170 according to the first embodiment. For instance, when the width of the substrate current collecting part 172 according to the first embodiment is x, the substrate current collecting part 372 according to the third embodiment may have a width of 3x. Also, one pair of substrate current collecting parts 372 arranged in a straight line may have a width of 3x, and the other pair of substrate current collecting parts 372 may have a different width. Also, the length of the substrate current collecting part 372 may be equal to, greater, or less than the length of the substrate current collecting part 172 according to the first embodiment. The cross-section of the substrate current collecting part 372 may have the same shape as the substrate current collecting part 172 according to the first embodiment. For example, when four substrate current collecting parts 372 are formed, a can connection part 374 and an elastic part 376 may be integrally formed on the two substrate current collecting parts 372 that form a straight line.

The can connection part 374 and the elastic part 376 may be formed by cutting the upper surfaces of the substrate current collecting parts 372, which form a straight line, in the longitudinal direction and bending one side thereof into a concave-convex shape. When the cut sheet material is processed into a concave-convex shape as illustrated in FIG. 7, the concave-convex portion serves as the elastic part 376, and the end portion located on the same plate surface or parallel to the plate surface of the first electrode current collecting plate 270 serves as the can connection part 374. The can connection part 374 is a portion cut from one substrate current collecting part 372 and is thus connected to the substrate current collecting part 372 to which the elastic part 376 is connected. However, the can connection part 374 has a free end that is not connected to the substrate current collecting part 372 facing the substrate current collecting part 372 to which the elastic part 376 is connected. The free end of the can connection part 374 is connected and fixed to the bottom surface of a can 110 or a cap assembly 150 by welding.

In addition, the elastic part may not be formed on a current collecting plate, but may be separately formed and coupled to the current collecting plate.

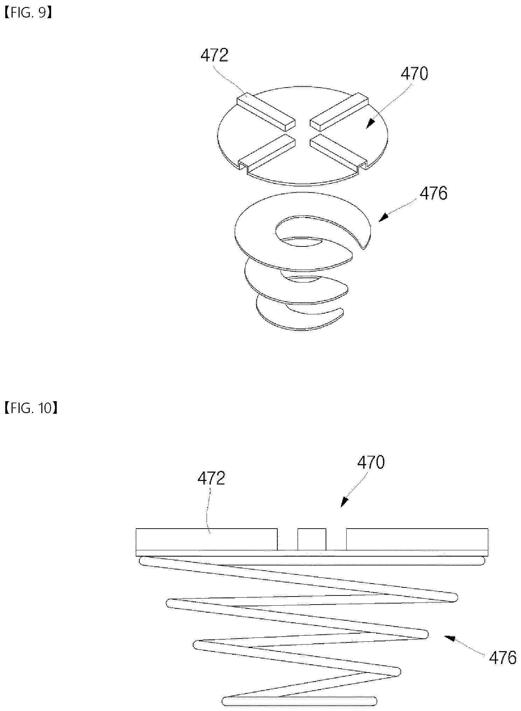

FIG. 9 is an exploded perspective view illustrating a current collecting plate according to a fourth embodiment of the present invention. FIG. 10 is a side cross-sectional view illustrating a current collecting plate of FIG. 9.

As illustrated in FIGS. 9 and 10, four substrate current collecting parts 472 having a certain width may be formed at intervals of 90 degrees and protrude on a disc-shaped region of a first electrode current collecting plate 470 according to a fourth embodiment of the present invention. For instance, the substrate current collecting part 472 may have the same shape and size as the first electrode current collecting plate 170 according to the first embodiment. However, unlike the embodiments described above, the elastic part 476 may not be integrally formed on the first electrode current collecting plate 470, but may be separately formed and coupled to the first electrode current collecting plate 470.

The elastic part 476 may include a disc-shaped plate spring having a diameter equal to or slightly less than that of the first electrode current collecting plate 470. The elastic part 476 is formed such that an elastic deformation direction thereof is the same as a longitudinal direction of the electrode assembly 130, and may include a conductive material. An edge of the elastic part 476 may be attached or welded to a plate surface of the first electrode current collecting plate 470 in a circumferential direction thereof. The first electrode current collecting plate 470 is not welded to the can 110, but is physically and electrically connected to the elastic part 476, and one end of the elastic part 476 is physically and electrically connected to the bottom surface of the can 110. Accordingly, the first electrode current collecting plate 470 and the can 110 may be electrically connected to each other.

According to the present invention as described above, the elastic part is provided integrally with or separably from the current collecting plate, and thus, shocks from external vibration can be absorbed. Thus, the issue wherein a substrate of an electrode assembly is squashed or compacted can be minimized.

The above-described embodiment is merely one example for carrying out the present invention, and the present invention is not limited to the embodiment, and the technical spirits of the present invention include all ranges of technologies that may be variously modified by an ordinary person in the art, to which the present invention pertains, without departing from the subject matter of the present invention as set forth in the following claims.

### INDUSTRIAL APPLICABILITY

The present invention can be used in the field of secondary batteries.

## Claims

1. A secondary battery comprising:
a can having a cylindrical shape with one end open;
an electrode assembly which is accommodated in the can and in which a first electrode plate, a separator, and a second electrode plate are stacked and wound in a cylindrical shape, wherein a first electrode non-coating portion of the first electrode plate protrudes at one end of the electrode assembly in a longitudinal direction, and a second electrode non-coating portion of the second electrode plate protrudes at the other end of the electrode assembly;
a cap assembly configured to close the open one end of the can in a state in which the electrode assembly is accommodated in the can;
a first electrode current collecting plate which is inserted into one end of the electrode assembly in the longitudinal direction, and comprises a plurality of substrate current collecting parts protruding from a plate surface and electrically connected to the first electrode non-coating portion, a can connection part spaced apart from the substrate current collecting parts and electrically connected to the can, and an elastic part elastically deformed in the longitudinal direction of the electrode assembly; and
a second electrode current collecting plate which is inserted into the other end of the electrode assembly in the longitudinal direction, and comprises a plurality of substrate current collecting parts protruding from a plate surface and electrically connected to the second electrode non-coating portion, a can connection part spaced apart from the substrate current collecting parts and electrically connected to the cap assembly, and an elastic part elastically deformed in the longitudinal direction of the electrode assembly.

2. The secondary battery of claim 1, wherein the first electrode current collecting plate and the second electrode current collecting plate have the same shape and are disposed symmetrically with each other.

3. The secondary battery of claim 1, wherein the elastic parts are formed integrally with the respective plate surfaces of the first electrode current collecting plate and the second electrode current collecting plate.

4. The secondary battery of claim 1, wherein the elastic parts are formed separately and coupled to the respective plate surfaces of the first electrode current collecting plate and the second electrode current collecting plate.

5. The secondary battery of claim 3, wherein the first electrode current collecting plate and the second electrode current collecting plate have a disc shape, and the plurality of substrate current collecting parts are formed in a radial direction while protruding.

6. The secondary battery of claim 5, wherein the elastic part has a concave-convex shape formed by cutting a portion of the plate surface and is spaced apart from the substrate current collecting parts.

7. The secondary battery of claim 5, wherein the elastic part is formed by cutting a portion of substrate current collecting parts, which are arranged in a straight line, among the plurality of substrate current collecting parts and bending the portion several times, and the cut end of the elastic part serves as the can connection part.

8. The secondary battery of claim 5, wherein the elastic part has a concave-convex shape formed by cutting a portion of substrate current collecting parts, which are arranged in a straight line, among the plurality of substrate current collecting parts, and the cut end of the elastic part serves as the can connection part.

9. The secondary battery of claim 7 or 8, wherein each of the substrate current collecting parts has a width greater than that of the elastic part.

10. The secondary battery of claim 4, wherein the elastic part comprises a disc-shaped plate spring having a diameter equal to or less than those of the first electrode current collecting plate and the second electrode current collecting plate.

11. The secondary battery of claim 10, wherein one end of the elastic part is physically and electrically connected to the first electrode current collecting plate or the second electrode current collecting plate, and the other end thereof is physically and electrically connected to the can or the cap assembly.

12. The secondary battery of claim 11, wherein the elastic part comprises a conductive material.

13. The secondary battery of claim 1, wherein a protruding direction of the substrate current collecting parts of the first electrode current collecting plate is oriented toward the first electrode non-coating portion, and a protruding direction of the substrate current collecting parts of the second electrode current collecting plate is oriented toward the second electrode non-coating portion.

14. The secondary battery of claim 13, wherein each of the substrate current collecting parts of the first electrode current collecting plate comprises a welding surface welded to the first electrode non-coating portion, and each of the substrate current collecting parts of the second electrode current collecting plate comprises a welding surface welded to the second electrode non-coating portion.
